(19) Europäisches Patentamt
European Patent Office
Office européen des brevets

(11) **EP 4 027 299 A2**

(12) **EUROPEAN PATENT APPLICATION**

(43) Date of publication:
**13.07.2022 Bulletin 2022/28**

(21) Application number: **22164198.8**

(22) Date of filing: **24.03.2022**

(51) International Patent Classification (IPC):
***G06T 5/00*** (2006.01)

(52) Cooperative Patent Classification (CPC):
**G06T 5/005;** G06T 2207/10028

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 CN 202110320739**

(71) Applicant: **BEIJING BAIDU NETCOM SCIENCE TECHNOLOGY CO., LTD.**
**No. 10 Shangdi 10th Street**
**Haidian District**
**Beijing 100085 (CN)**

(72) Inventors:
• **JIANG, Minyue**
 **Beijing, 100085 (CN)**
• **TAN, Xiao**
 **Beijing, 100085 (CN)**
• **SUN, Hao**
 **Beijing, 100085 (CN)**

(74) Representative: **advotec.**
**Patent- und Rechtsanwaltspartnerschaft**
**Tappe mbB**
**Widenmayerstraße 4**
**80538 München (DE)**

(54) **METHOD AND APPARATUS FOR GENERATING DEPTH MAP, AND STORAGE MEDIUM**

(57) A method for generating a depth map, an electronic device and a storage medium. The method includes: obtaining (101, 201) a point cloud map and a visual image of a scene; generating (102) a first depth value of each pixel in the visual image based on the point cloud map and the visual image; determining (103, 203) a three-dimensional coordinate location of each pixel in a world coordinate system based on a coordinate location and the first depth value of each pixel in the visual image; generating (104) a second depth value of each pixel by inputting the three-dimensional coordinate location and pixel information of each pixel into a depth correction model; and generating (105, 208) the depth map of the scene based on the second depth value of each pixel.

obtaining a point cloud map and a visual image of a scene — 101

generating a first depth value of each pixel in the visual image based on the point cloud map and the visual image — 102

determining a three-dimensional coordinate location of each pixel in a world coordinate system based on a coordinate location and the first depth value of each pixel in the visual image — 103

generating a second depth value of each pixel by inputting the three-dimensional coordinate location and pixel information of each pixel into a depth correction model — 104

generating the depth map of the scene based on the second depth value of each pixel — 105

FIG. 1

EP 4 027 299 A2

**Description**

## TECHNICAL FIELD

The disclosure relates to a field of artificial intelligence technology, specifically a technical field of computer vision, intelligent transportation and deep learning. The disclosure provides a method for generating a depth map, an apparatus for generating a depth map, and a storage medium.

## BACKGROUND

Scene depth completion is an important topic in the field of computer vision, which refers to using an algorithm to complete holes or unreliable positions in a depth map to obtain a dense and accurate depth map, thereby playing a key role in the fields of robot, autonomous driving and augmented reality.

Therefore, how to obtain an accurate depth map is an urgent technical problem to be solved.

## SUMMARY

Embodiments of the disclosure provide a method for generating a depth map, an apparatus for generating a depth map, and a storage medium, to improve an accuracy of a depth map.

Embodiments of the disclosure in a first aspect provide a method for generating a depth map. The method includes: obtaining a point cloud map and a visual image of a scene; generating a first depth value of each pixel in the visual image based on the point cloud map and the visual image; determining a three-dimensional coordinate location of each pixel in a world coordinate system based on a coordinate location and the first depth value of each pixel in the visual image; generating a second depth value of each pixel by inputting the three-dimensional coordinate location and pixel information of each pixel into a depth correction model; and generating the depth map of the scene based on the second depth value of each pixel.

Optionally, generating the second depth value of each pixel by inputting the three-dimensional coordinate location and the pixel information of each pixel into the depth correction model, comprises: generating adjacent coordinate locations of the three-dimensional coordinate location by inputting the three-dimensional coordinate location into a grouping layer of the depth correction model; generating a first intermediate feature of the three-dimensional coordinate location by inputting the three-dimensional coordinate location and the pixel information of the pixel into a feature extraction layer of the depth correction model; generating a second intermediate feature of the three-dimensional coordinate location by inputting the first intermediate feature of the three-dimensional coordinate location and first intermediate features of the adjacent coordinate locations of the three-dimensional coordinate location into a feature fusion layer of the depth correction model; and generating the second depth value of the three-dimensional coordinate location based on the second intermediate feature of the three-dimensional coordinate location.

Optionally, generating the adjacent coordinate locations of the three-dimensional coordinate location by inputting the three-dimensional coordinate location into the grouping layer of the depth correction model comprises: determining a first preset space range based on the three-dimensional coordinate location by using the grouping layer of the depth correction model; and determining three-dimensional coordinate locations within the first preset space range by the grouping layer of the depth correction model as the adjacent coordinate locations of the three-dimensional coordinate location.

Optionally, generating the adjacent coordinate locations of the three-dimensional coordinate location by inputting the three-dimensional coordinate location into the grouping layer of the depth correction model comprises: determining a first preset space range based on the three-dimensional coordinate location by using the grouping layer of the depth correction model; and determining, by the grouping layer of the depth correction model, coordinate locations obtained based on three-dimensional coordinate locations within the first preset space range and preset offsets as the adjacent coordinate locations of the three-dimensional coordinate location, wherein there is a correspondence between the three-dimensional coordinate locations within the first preset space range and the preset offsets.

Optionally, generating the adjacent coordinate locations of the three-dimensional coordinate location by inputting the three-dimensional coordinate location into the grouping layer of the depth correction model comprises: determining a first preset space range based on the three-dimensional coordinate location by using the grouping layer of the depth correction model; and determining, by the grouping layer of the depth correction model, three-dimensional coordinate locations within the first preset space range and coordinate locations obtained based on the three-dimensional coordinate locations within the first preset space range and preset offsets as the adjacent coordinate locations of the three-dimensional coordinate location, wherein there is a correspondence between the three-dimensional coordinate locations within the first preset space range and the preset offsets.

Optionally, the first intermediate feature of the adjacent coordinate location is obtained based on the first intermediate feature of three-dimensional coordinate locations each having a distance from the adjacent coordinate location within a preset range.

Optionally, generating the first depth value of each pixel in the visual image based on the point cloud image and the visual image comprises: generating the first depth value of each pixel in the visual image by inputting the point cloud map and the visual image into a codec network.

Embodiments of the disclosure in a second aspect provide an apparatus for generating a depth map. The apparatus includes: an obtaining module, a first generating module, a determining module, a second generating module and a third generating module.

The obtaining module is configured to obtain a point cloud map and a visual image of a scene.

The first generating module is configured to generate a first depth value of each pixel in the visual image based on the point cloud map and the visual image.

The determining module is configured to determine a three-dimensional coordinate location of each pixel in a world coordinate system based on a coordinate location and the first depth value of each pixel in the visual image.

The second generating module is configured to generate a second depth value of each pixel by inputting the three-dimensional coordinate location and pixel information of each pixel into a depth correction model.

The third generating module is configured to generate the depth map of the scene based on the second depth value of each pixel.

Optionally, the second generating module comprises: a first generating unit, configured to generate adjacent coordinate locations of the three-dimensional coordinate location by inputting the three-dimensional coordinate location into a grouping layer of the depth correction model; a feature extracting unit, configured to generate a first intermediate feature of the three-dimensional coordinate location by inputting the three-dimensional coordinate location and the pixel information of the pixel into a feature extraction layer of the depth correction model; a feature fusing unit, configured to generate a second intermediate feature of the three-dimensional coordinate location by inputting the first intermediate feature of the three-dimensional coordinate location and first intermediate features of the adjacent coordinate locations of the three-dimensional coordinate location into a feature fusion layer of the depth correction model; and a second generating unit, configured to generate the second depth value of the three-dimensional coordinate location based on the second intermediate feature of the three-dimensional coordinate location.

Optionally, the first generating unit is further configured to: determine a first preset space range based on the three-dimensional coordinate location by using the grouping layer of the depth correction model; and determine the three-dimensional coordinate locations within the first preset space range by the grouping layer of the depth correction model as the adjacent coordinate locations of the three-dimensional coordinate location.

Optionally, the first generating unit is further configured to: determine a first preset space range based on the three-dimensional coordinate location by using the grouping layer of the depth correction model; and determine, by the grouping layer of the depth correction model, coordinate locations obtained based on three-dimensional coordinate locations within the first preset space range and preset offsets as the adjacent coordinate locations of the three-dimensional coordinate location, wherein there is a correspondence between the three-dimensional coordinate locations within the first preset space range and the preset offsets.

Optionally, the first generating unit is further configured to: determine a first preset space range based on the three-dimensional coordinate location by using the grouping layer of the depth correction model; and determine, by the grouping layer of the depth correction model, three-dimensional coordinate locations within the first preset space range and coordinate locations obtained based on the three-dimensional coordinate locations within the first preset space range and preset offsets as the adjacent coordinate locations of the three-dimensional coordinate location, wherein there is a correspondence between the three-dimensional coordinate locations within the first preset space range and the preset offsets.

Optionally, the first generating module is further configured to: generate the first depth value of each pixel in the visual image by inputting the point cloud map and the visual image into a codec network.

Embodiments of the disclosure in a third aspect provide an electronic device. The electronic device includes: at least one processor and a memory communicatively coupled to the at least one processor. The memory stores instructions executable by the at least one processor, and when the instructions are executed by the at least one processor, the at least one processor is caused to execute the method according to the first aspect of the disclosure.

Embodiments of the disclosure in a fourth aspect provide a non-transitory computer-readable storage medium storing computer instructions, and the computer instructions are used to make a computer execute the method according to the first aspect of the disclosure.

Embodiments of the disclosure in a fifth aspect provide a computer program product including a computer program, when the computer program is executed by a processor, the method according to the first aspect of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

## BRIEF DESCRIPTION OF THE DRAWINGS

The drawings are used to better understand the solution and do not constitute a limitation to the disclosure, in which:

FIG. 1 is a flowchart of a method for generating a depth map according to an embodiment of the disclosure.

FIG. 2 is a flowchart of another method for generating a depth map according to an embodiment of the disclosure.

FIG. 3 is a block diagram of an apparatus for generating a depth map according to an embodiment of the disclosure.

FIG. 4 is a block diagram of an electronic device 800 according to an embodiment of the disclosure.

## DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

A method for generating a depth map, an apparatus for generating a depth map, an electronic device and a storage medium of the embodiments of the disclosure are described below with reference to the accompanying drawings.

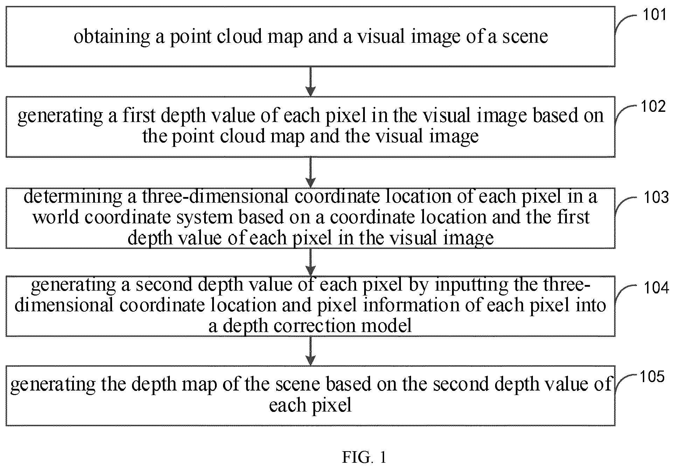

FIG. 1 is a flowchart of a method for generating a depth map according to an embodiment of the disclosure.

As illustrated in FIG. 1, the method includes the followings.

At block 101, a point cloud map and a visual image of a scene are obtained.

In an example of the embodiment, the visual image and the point cloud map data of the scene are synchronously collected by sensors such as a camera and a laser radar. The visual image may be a colorful RGB image or a black and white image. The scene may include, for example, roads, buildings and vehicles.

A point cloud in the point cloud map refers to point data about surface appearance of one or more objects measured by sensors such as a laser radar. The point data contains x, y, z coordinates, depth and reflection intensity information.

At block 102, a first depth value of each pixel in the visual image is generated based on the point cloud map and the visual image.

The depth information obtained by the point cloud map is relatively sparse, and some objects in the image of the scene are not displayed in the point cloud map, which means that the point cloud map does not contain the depth information of some pixels. In an embodiment, based on multi-dimensional information carried in the point cloud map and pixel information contained in the visual image, for example, information of the three primary colors, i.e., red, green and blue, structure information of each object contained in the image is determined to initially extract multi-dimensional features. The multi-dimensional features are used to perform an initial depth estimation on each pixel in the visual image to obtain the first depth value of each pixel in the visual image.

At block 103, a three-dimensional coordinate location of each pixel in a world coordinate system is determined based on a coordinate location and the first depth value of each pixel in the visual image.

In an example of the embodiment, the coordinate location of each pixel in the visual image in a camera coordinate system and the first depth value of each pixel are projected into the world coordinate system by using the camera's internal parameter matrixes to obtain the three-dimensional coordinate location of each pixel in the world coordinate system.

$$Z_c \begin{pmatrix} u \\ v \\ 1 \end{pmatrix} = \begin{pmatrix} fx & 0 & 0 & u_0 \\ 0 & fy & 0 & v_0 \\ 0 & 0 & 1 & 0 \end{pmatrix} \begin{pmatrix} Xc \\ Yc \\ Zc \\ 1 \end{pmatrix}.$$

where, u and v are the coordinate positions of each pixel in the visual image in the camera coordinate system, fx represents a horizontal focal length of the camera, fy represents a vertical focal length of the camera, u0 and v0 represent principal point coordinates of the camera, such as, the origin coordinates, Xc, Yc, and Zc represent the three-dimensional coordinate position of the pixel point projected to the world coordinate system.

In an embodiment, after obtaining an initial depth estimation value of each pixel, that is, the first depth estimation value, each pixel and the first depth estimation value in the visual image are mapped to the real three-dimensional world to obtain the three-dimensional coordinate location of each pixel, which can be used to determine a structural relationship of respective pixels in the real world.

At block 104, a second depth value of each pixel is generated by inputting the three-dimensional coordinate location and pixel information of each pixel into a depth correction model.

The depth correction model has previously learned a corresponding relationship between the three-dimensional coordinate location of the pixel, the pixel information of the pixel, and the depth information of the pixel.

In an embodiment, multi-dimensional information contained in the three-dimensional coordinate location and the pixel information of the pixel are input into the depth correction model to capture neighborhood information of each pixel in the space. Then the structure information of each object in the image in the three-dimensional space is extracted to correct the first depth value of the pixel corresponding to an area subjected to inaccurate initial depth estimation or to complement each pixel with an uncertain depth value (i.e., the depth value of the pixel with the first depth value of 0) to obtain an accurate second depth value of each pixel, which improves the accuracy of depth estimation.

At block 105, the depth map of the scene is generated based on the second depth value of each pixel.

In an embodiment, the depth map of the scene can be generated according to the second depth value of each pixel output by the depth correction model, which improves the accuracy of determining the depth map of the scene.

In the method for generating the depth map of the embodiment, the first depth value of each pixel in the visual image is generated according to the acquired point cloud map and the visual image. According to the coordinate location and the first depth value of each pixel in the visual image, the three-dimensional coordinate location of each pixel in the world coordinate system is determined. The three-dimensional coordinate location of each pixel and the pixel information of the pixel are input into the depth correction model to generate the second depth value of each pixel. According to the second depth value of each pixel, the depth map of the scene is generated. In the disclosure, by mapping each pixel in the visual image and the first depth estimation value to the real three-dimensional world, the three-dimensional coordinate location of each pixel is obtained. Based on the three-dimensional coordinate location of each pixel and the pixel information, the neighborhood information of each pixel in the space is obtained, and then the feature extraction is performed to obtain the structure information of each object in the image in the three-dimensional space, to correct the first depth value of the pixel in the initial depth estimation and obtain accurate second depth value of the pixel, thereby improving the accuracy of depth estimation.

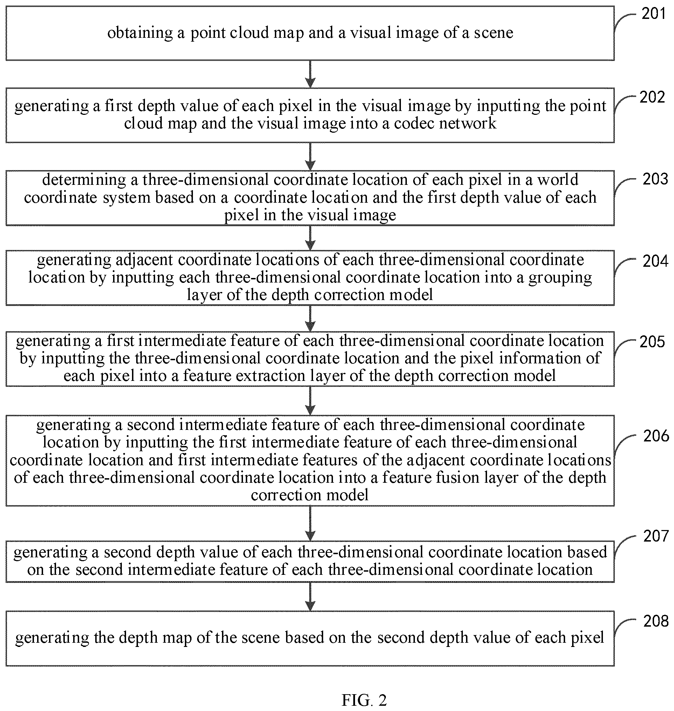

Based on the above embodiments, embodiments of the disclosure further provide another method for generating a depth map. FIG. 2 is a flowchart of another method for generating a depth map according to an embodiment of the disclosure. As illustrated in FIG. 2, the method includes the followings.

At block 201, a point cloud map and a visual image of a scene are obtained.

For details, reference may be made to the explanations in the above embodiments, and the principles are the same, which will not be repeated in this embodiment.

At block 202, a first depth value of each pixel in the visual image is generated by inputting the point cloud map and the visual image into a codec network.

In an embodiment, the pixel information is information of the three primary colors, i.e., red, green and blue, and structure information of an object can be determined according to a similarity of the RGB information.

In an implementation of the embodiment, the point cloud map and the colorful vision image are input to a recognition model of the encoder and decoder architecture. The encoder network includes multiple convolutional layers, for example, 30-40 convolutional layers, configured to extract RGB features and initial depth features, and to input the extracted RGB features and the initial depth features into the decoder network to obtain an initial depth estimation value of each pixel in the visual image, which is called as the first depth estimation value in the embodiment. The decoder network includes multiple deconvolution layers, for example, 4-5 deconvolution layers. In this disclosure, the multi-dimensional features contained in the point cloud map and the visual image are extracted through the encoder and decoder network, and the depth information is determined according to the extracted multi-dimensional features, thus the accuracy of the initial depth estimation is improved.

At block 203, a three-dimensional coordinate location of each pixel in a world coordinate system is determined based on a coordinate location and the first depth value of each pixel in the visual image.

In detail, reference may be made to the explanation in the above embodiments, the principle is the same, and the details are not repeated in this embodiment.

At block 204, adjacent coordinate locations of the three-dimensional coordinate location are generated by inputting the three-dimensional coordinate location into a grouping layer of the depth correction model.

In an embodiment, the grouping layer of the depth correction model determines the adjacent coordinate locations of the three-dimensional coordinate location according to a distance between the three-dimensional coordinate locations.

The depth correction model may be a pointnet network.

In a first implementation of the embodiment, each three-dimensional coordinate location is input into the grouping layer of the depth correction model, so that the grouping layer of the depth correction model determines a first preset space range according to each three-dimensional coordinate location. The three-dimensional coordinate locations within the first preset space range can be used as the adjacent coordinate locations of the three-dimensional coordinate location. In detail, the grouping layer of the depth correction model takes each three-dimensional coordinate location as a center of the circle, and a preset distance as a radius to obtain a spherical preset space range, and the three-dimensional coordinate locations within the first preset space range are determined as the adjacent coordinate locations of the corresponding three-dimensional coordinate location.

For example, taking a three-dimensional coordinate location A as the center and setting a distance R as the radius, the spherical first preset space range is determined, and it is determined that there are 4 three-dimensional coordinate locations within the first preset space range, denoted as B1, B2, B3 and B4, then the three-dimensional coordinate positions B1, B2, B3 and B4 are adjacent coordinate locations of the three-dimensional coordinate location A. The three-dimensional coordinate locations of the adjacent coordinate locations are relatively close in space and generally have similar features, which can be used to determine structural features of objects in the three-dimensional space to improve the accuracy of subsequent depth estimation.

In a second implementation of the embodiment, each three-dimensional coordinate location is input to the grouping layer of the depth correction model, so that the grouping layer of the depth correction model determines the corresponding first preset space range according to each three-dimensional coordinate location. Further, according to three-dimensional coordinate locations within the first preset space range and a preset offset, the adjacent coordinate locations of the corresponding three-dimensional coordinate location are determined. Each three-dimensional coordinate location within the first preset space range has a respective preset offset, and the same preset offset or different preset offsets can be set for different three-dimensional coordinate locations. In detail, according to each three-dimensional coordinate location, the three-dimensional coordinate locations belonging to the first preset space range are determined. According to the offsets in the X, Y, and Z directions included in the preset offset, the new three-dimensional coordinate locations are determined, and the new three-dimensional coordinate locations are determined as the adjacent coordinate locations of the corresponding three-dimensional coordinate location.

For example, according to the three-dimensional coordinate location A, there are four three-dimensional coordinate locations in the first preset space range, which are respectively marked as B1, B2, B3 and B4. The preset offsets corresponding to the three-dimensional coordinate locations B1, B2, B3, and B4 are superimposed, respectively, to obtain the offset three-dimensional coordinate locations. For example, the preset offset corresponding to the three-dimensional coordinate location B1 (X1, Y1, Z1) are $\Delta X_1$, $\Delta Y_1$ and $\Delta Z_1$, then the three-dimensional coordinate location obtained after offsetting B1 is B1' (X1+ $\Delta X_1$, Y1 + $\Delta Y_1$, Z1+ $\Delta Z_1$). Similarly, the three-dimensional coordinate locations B2', B3' and B4' are obtained after offsetting B2, B3 and B4. Therefore, the three-dimensional coordinate locations B1', B2', B3' and B4' obtained after the offsetting can be used as the adjacent coordinate locations of the three-dimensional coordinate location A.

It should be noted that the multiple three-dimensional coordinate locations obtained after the offsetting may be one of the three-dimensional coordinate locations of the pixels in the world coordinate system.

For example, in some scenes, a target object contained in the image is relatively large, for example, the target object is a large truck in the image of the scene. Due to the large volume of the target object, for each three-dimensional coordinate location belonging to the target object, by offsetting the three-dimensional coordinate locations within the first preset range, the three-dimensional coordinate locations obtained after the offsetting are regarded as the adjacent coordinate locations, such that a distribution range of the adjacent coordinate positions can be expanded to improve the accuracy of subsequent depth estimation.

In an example of the embodiment, the method for determining the offset may include determining according to an offset network contained in the grouping layer of the depth correction model, the offset network has previously learned a corresponding relationship between the input three-dimensional coordinate locations and the offsets. Based on the offset, it can expand to the far end of the object, which improves the accuracy of determining the offset in different scenes, thereby improving the accuracy of depth estimation.

In a third implementation, when determining the adjacent coordinate locations of each three-dimensional coordinate location, the adjacent coordinate locations determined by the above-mentioned first implementation and the adjacent coordinate locations after the offsetting determined by the second implementation can be both used as the adjacent coordinate locations of the corresponding three-dimensional coordinate location, to increase the number of adjacent coordinate locations corresponding to each location, such that the amount of feature information carried by each three-dimensional coordinate location can be increased in subsequent steps, thereby improving the accuracy of depth estimation.

At block 205, a first intermediate feature of each three-dimensional coordinate location is generated by inputting the three-dimensional coordinate location and the pixel information of each pixel into a feature extraction layer of the depth correction model.

The pixel information is the information of the three primary colors of red, green, and blue. The similarity of the RGB information is used to determine the structure information of the object.

In an embodiment, each three-dimensional coordinate location and the pixel information of the corresponding pixel at the three-dimensional coordinate location, that is, six-dimensional information [R, G, B, Xc, Yc, Zc] is input to the feature extraction layer of the depth correction model, to extract the first intermediate feature carried in each three-dimensional coordinate location in the three-dimensional space. The first intermediate feature indicates the depth information of the pixel.

It should be noted that the multiple offset three-dimensional coordinate locations are obtained by offsetting multiple three-dimensional coordinate locations within the first preset range. If the offset three-dimensional coordinate location does not belong to the three-dimensional coordinate location of any pixel in the visual image in the world coordinate system, the first intermediate feature of the offset three-dimensional coordinate location is determined based on the first intermediate feature of at least one three-dimensional coordinate location whose distance from each offset three-dimensional coordinate location is within a preset threshold. For example, it is determined by weighted averaging and the weight is inversely proportional to the distance, and the preset threshold is less than the preset offset.

It should be noted that block 205 can be executed before block 204, can also be executed after block 204, or can be executed synchronously with block 204, which is not limited in this embodiment.

At block 206, a second intermediate feature of each three-dimensional coordinate location is generated by inputting the first intermediate feature of each three-dimensional coordinate location and first intermediate features of the adjacent coordinate locations of each three-dimensional coordinate location into a feature fusion layer of the depth correction model.

In an embodiment, the extracted first intermediate features of the adjacent coordinates location corresponding to each three-dimensional coordinate location is fused into the first intermediate feature of the corresponding three-dimensional coordinate location, to obtain the second intermediate feature of the corresponding three-dimensional coordinate location. The feature information carried by each three-dimensional coordinate location is increased, and since the adjacent coordinate locations have similar features and high probability of belonging to points of the same object space, which can be used to construct the structural information of the object in the image in the three-dimensional space, thereby improving the accuracy of edge depth estimation during depth estimation.

It should be noted that a feature of each three-dimensional coordinate location determined by offsetting may be determined based on a feature of a three-dimensional coordinate location having a distance from the corresponding three-dimensional coordinate location within a preset range.

For example, C1 is a three-dimensional coordinate location obtained by offsetting, and D1 and D2 are three-dimensional coordinate locations obtained by projecting each pixel. If the distance between C1 and D1 is within the preset range, the first intermediate feature of D1 is determined as the first intermediate feature of C1. If the distance between D1 and C1, and the distance between D2 and C1 are within the preset range, the first intermediate feature of D1 and the first intermediate feature of D2 are averaged to determine the first intermediate feature of C1.

At block 207, a second depth value of each three-dimensional coordinate location is generated based on the second intermediate feature of each three-dimensional coordinate location.

In an example of the embodiment, according to the extracted second intermediate feature of each three-dimensional coordinate position, the second intermediate feature is input to the feature extraction layer to perform the feature extraction continually. The feature extraction layer taking the second intermediate feature as input may be different from the feature extraction layer in step 205. The feature extraction layer in this step may include multiple sub-feature extraction layers. After the feature extraction is performed by the multiple sub-feature extraction layers, the dimension of the second intermediate feature is increased. Furthermore, a feature mapping is performed on the second intermediate feature with the increased dimension to reduce the dimension to obtain a feature consistent with the depth estimation. As an implementation, a one-dimensional feature indicating the depth is obtained, and the second depth value of the corresponding three-dimensional coordinate location is determined according to the one-dimensional feature.

At block 208, the depth map of the scene is generated based on the second depth value of each pixel.

In an embodiment, the depth map of the scene is generated according to the second depth value of each pixel output by the depth correction model, which improves the accuracy of determining the depth map of the scene.

In the method for generating the depth map of the embodiment, the first depth value of each pixel in the visual image is generated according to the acquired point cloud map and the visual image. According to the coordinate location and the first depth value of each pixel in the visual image, the three-dimensional coordinate location of each pixel in the world coordinate system is determined. The three-dimensional coordinate location of each pixel and the RGB information corresponding to the pixel are input into the depth correction model to generate the second depth value of each pixel. According to the second depth value of each pixel, the depth map of the scene is generated. In the disclosure, by mapping each pixel in the visual image and the first depth estimation value to the real three-dimensional world, the three-dimensional coordinate location of each pixel is obtained. Based on the three-dimensional coordinate location of each pixel and the RGB information of the pixel, a pointnet network is adopted to capture the neighborhood information of each pixel in space, and then perform feature extraction to obtain the structure information of each object in the image in the three-dimensional space, so as to correct the first depth value of the pixel during the initial depth estimation. Therefore, the accurate second depth value of each pixel is obtained, and the accuracy of depth estimation is improved.

In an implementation of the embodiment, after the second depth value of each pixel is obtained as described above, the above blocks 203-207 are repeated based on the second depth value. That is, the second depth value obtained based on the depth correction is re-projected into the world coordinate system to obtain the updated three-dimensional coordinate position, and then the depth correction model is used to re-extract neighborhood features to correct the initial depth estimation value, so as to obtain the final depth estimation value, thereby improving the accuracy of depth estimation.

In order to implement the above embodiments, the embodiments of the disclosure provide an apparatus for generating a depth map.

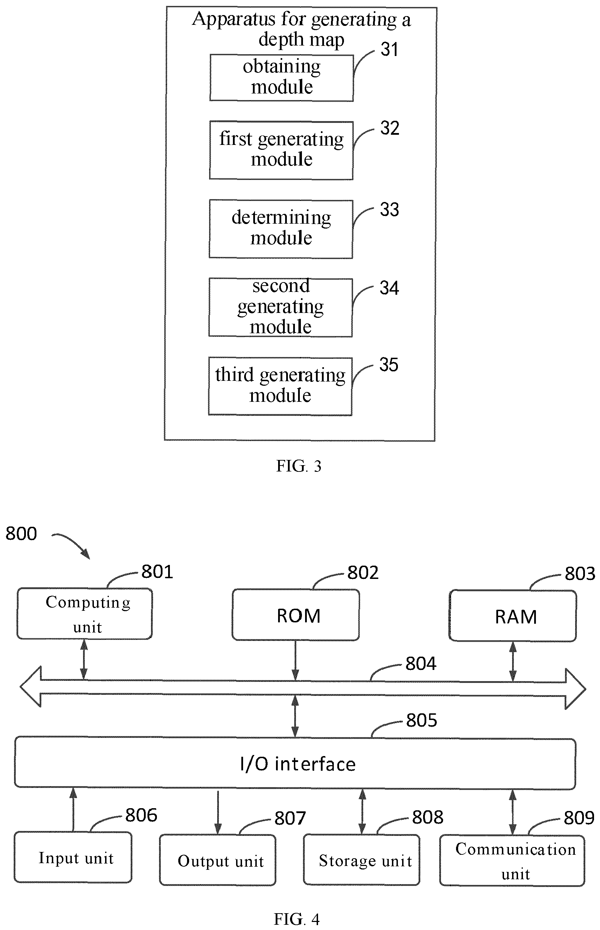

FIG. 3 is a block diagram of an apparatus for generating a depth map according to an embodiment of the disclosure.

As illustrated in FIG. 3, the apparatus includes: an obtaining module 31, a first generating module 32, a determining module 33, a second generating module 34, and a third generating module 35.

The obtaining module 31 is configured to obtain a point cloud map and a visual image of a scene.

The first generating module 32 is configured to generate a first depth value of each pixel in the visual image based on the point cloud map and the visual image.

The determining module 33 is configured to determine a three-dimensional coordinate location of each pixel in a world coordinate system based on a coordinate location and the first depth value of each pixel in the visual image.

The second generating module 34 is configured to generate a second depth value of each pixel by inputting the three-dimensional coordinate location and pixel information of each pixel into a depth correction model.

The third generating module 35 is configured to generate the depth map of the scene based on the second depth value of each pixel.

In an implementation, the second generating module 34 includes: a first generating unit, a feature extracting unit, a feature fusing unit and a second generating unit.

The first generating unit is configured to generate adjacent coordinate locations of the three-dimensional coordinate location by inputting the three-dimensional coordinate location into a grouping layer of the depth correction model.

The feature extracting unit is configured to generate a first intermediate feature of the three-dimensional coordinate location by inputting the three-dimensional coordinate location and the pixel information of the pixel into a feature extraction layer of the depth correction model.

The feature fusing unit is configured to generate a second intermediate feature of the three-dimensional coordinate location by inputting the first intermediate feature of the three-dimensional coordinate location and first intermediate features of the adjacent coordinate locations of the three-dimensional coordinate location into a feature fusion layer of the depth correction model.

The second generating unit is configured to generate the second depth value of the three-dimensional coordinate location based on the second intermediate feature of the three-dimensional coordinate location.

In an implementation, the first generating unit is further configured to: determine a first preset space range based on the three-dimensional coordinate location by using the grouping layer of the depth correction model; and determine three-dimensional coordinate locations within the first preset space range by the grouping layer of the depth correction model as the adjacent coordinate locations of the three-dimensional coordinate location.

In an implementation, the first generating unit is further configured to: determine a first preset space range based on the three-dimensional coordinate location by using the grouping layer of the depth correction model; and determine the adjacent coordinate locations of the three-dimensional coordinate location based on three-dimensional coordinate locations within the first preset space range and preset offsets by using the grouping layer of the depth correction model, in which there is a correspondence between the three-dimensional coordinate locations within the first preset space range and the preset offsets.

In an implementation, the first generating module 32 is further configured to: generate the first depth value of each pixel in the visual image by inputting the point cloud map and the visual image into a codec network.

It should be noted that the above explanation of the method embodiments is also applicable to the apparatus embodiments, and the principle is the same, which will not be repeated in the embodiments.

With the apparatus for generating a depth map, the first depth value of each pixel in the visual image is generated based on the point cloud map and the visual image. The three-dimensional coordinate location of each pixel in the world coordinate system is determined based on the coordinate location and the first depth value of each pixel in the visual image. The second depth value of each pixel is generated by inputting the three-dimensional coordinate location and pixel information of each pixel into the depth correction model. The depth map of the scene is generated based on the second depth value of each pixel. In the disclosure, by mapping the pixels and first depth estimation values in the visual image to the real three-dimensional world, the three-dimensional coordinate location of each pixel is obtained. Based on the three-dimensional coordinate location and the pixel information of each pixel, neighborhood information of each pixel in the space is captured, and then feature extraction is performed to obtain structure information of each object in the image in the three-dimensional space to correct the first depth value of the pixel during initial depth estimation, in order to obtain the accurate second depth value of each pixel, which improves the accuracy of depth estimation.

In an embodiment, the disclosure further provides an electronic device, a readable storage medium and a computer program product.

In order to implement the above embodiments, the disclosure provides an electronic device. The electronic device includes: at least one processor and a memory communicatively coupled to the at least one processor. The memory stores instructions executable by the at least one processor, and when the instructions are executed by the at least one processor, the at least one processor is caused to execute the method according to the above embodiments.

In order to implement the above embodiments, the embodiments of the disclosure provide a non-transitory computer-readable storage medium storing computer instructions, the computer instructions are used to make a computer execute the method described in the above method embodiments.

In order to implement the above embodiments, the embodiments of the disclosure provide a computer program product including a computer program, and when the computer program is executed by a processor, the method according to the above method embodiments is implemented.

FIG. 4 is a block diagram of an electronic device 800 configured to implement the method according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 4, the device 800 includes a computing unit 801 performing various appropriate actions and processes based on computer programs stored in a read-only memory (ROM) 802 or computer programs loaded from the storage unit 808 to a random access memory (RAM) 803. In the RAM 803, various programs and data required for the operation of the device 800 are stored. The computing unit 801, the ROM 802, and the RAM 803 are connected to each other through a bus 804. An input/output (I/O) interface 805 is also connected to the bus 804.

Components in the device 800 are connected to the I/O interface 805, including: an inputting unit 806, such as a keyboard, a mouse; an outputting unit 807, such as various types of displays, speakers; a storage unit 808, such as a disk, an optical disk; and a communication unit 809, such as network cards, modems, wireless communication transceivers, and the like. The communication unit 809 allows the device 800 to exchange information/data with other devices through a computer network such as the Internet and/or various telecommunication networks.

The computing unit 801 may be various general-purpose and/or dedicated processing components with processing and computing capabilities. Some examples of computing unit 801 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 801 executes the various methods and processes described above. For example, in some embodiments, the method may be implemented as a computer software program, which is tangibly contained in a machine-readable medium, such as the storage unit 808. In some embodiments, part or all of the computer program may be loaded and/or installed on the device 800 via the ROM 802 and/or the communication unit 809. When the computer program is loaded on the RAM 803 and executed by the computing unit 801, one or more steps of the method described above may be executed. Alternatively, in other embodiments, the computing unit 801 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for generating a depth map, comprising:

   obtaining (101, 201) a point cloud map and a visual image of a scene;
   generating (102) a first depth value of each pixel in the visual image based on the point cloud map and the visual image;
   determining (103, 203) a three-dimensional coordinate location of each pixel in a world coordinate system based on a coordinate location and the first depth value of each pixel in the visual image;
   generating (104) a second depth value of each pixel by inputting the three-dimensional coordinate location and pixel information of each pixel into a depth correction model; and
   generating (105, 208) the depth map of the scene based on the second depth value of each pixel.

2. The method of claim 1, wherein generating (104) the second depth value of each pixel by inputting the three-dimensional coordinate location and the pixel information of each pixel into the depth correction model, comprises:

   generating (204) adjacent coordinate locations of the three-dimensional coordinate location by inputting the three-dimensional coordinate location into a grouping layer of the depth correction model;
   generating (205) a first intermediate feature of the three-dimensional coordinate location by inputting the three-dimensional coordinate location and the pixel information of the pixel into a feature extraction layer of the depth correction model;
   generating (206) a second intermediate feature of the three-dimensional coordinate location by inputting the first intermediate feature of the three-dimensional coordinate location and first intermediate features of the adjacent coordinate locations of the three-dimensional coordinate location into a feature fusion layer of the depth correction model; and

generating (207) the second depth value of the three-dimensional coordinate location based on the second intermediate feature of the three-dimensional coordinate location.

3.  The method of claim 2, wherein generating (204) the adjacent coordinate locations of the three-dimensional coordinate location by inputting the three-dimensional coordinate location into the grouping layer of the depth correction model comprises:

    determining a first preset space range based on the three-dimensional coordinate location by using the grouping layer of the depth correction model; and
    determining three-dimensional coordinate locations within the first preset space range by the grouping layer of the depth correction model as the adjacent coordinate locations of the three-dimensional coordinate location.

4.  The method of claim 2, wherein generating (204) the adjacent coordinate locations of the three-dimensional coordinate location by inputting the three-dimensional coordinate location into the grouping layer of the depth correction model comprises:

    determining a first preset space range based on the three-dimensional coordinate location by using the grouping layer of the depth correction model; and
    determining, by the grouping layer of the depth correction model, coordinate locations obtained based on three-dimensional coordinate locations within the first preset space range and preset offsets as the adjacent coordinate locations of the three-dimensional coordinate location, wherein there is a correspondence between the three-dimensional coordinate locations within the first preset space range and the preset offsets.

5.  The method of claim 2, wherein generating (204) the adjacent coordinate locations of the three-dimensional coordinate location by inputting the three-dimensional coordinate location into the grouping layer of the depth correction model comprises:

    determining a first preset space range based on the three-dimensional coordinate location by using the grouping layer of the depth correction model; and
    determining, by the grouping layer of the depth correction model, three-dimensional coordinate locations within the first preset space range and coordinate locations obtained based on the three-dimensional coordinate locations within the first preset space range and preset offsets as the adjacent coordinate locations of the three-dimensional coordinate location, wherein there is a correspondence between the three-dimensional coordinate locations within the first preset space range and the preset offsets.

6.  The method of claim 4 or 5, wherein when the adjacent coordinate location is obtained based on the three-dimensional coordinate location within the first preset space range and the preset offset, the first intermediate feature of the adjacent coordinate location is obtained based on the first intermediate features of three-dimensional coordinate locations each having a distance from the adjacent coordinate location within a preset range.

7.  The method of claim 1, wherein generating (102) the first depth value of each pixel in the visual image based on the point cloud image and the visual image comprises:
    generating (202) the first depth value of each pixel in the visual image by inputting the point cloud map and the visual image into a codec network.

8.  An apparatus for generating a depth map, comprising:

    an obtaining module (31), configured to obtain a point cloud map and a visual image of a scene;
    a first generating module (32), configured to generate a first depth value of each pixel in the visual image based on the point cloud map and the visual image;
    a determining module (33), configured to determine a three-dimensional coordinate location of each pixel in a world coordinate system based on a coordinate location and the first depth value of each pixel in the visual image;
    a second generating module (34), configured to generate a second depth value of each pixel by inputting the three-dimensional coordinate location and pixel information of each pixel into a depth correction model; and
    a third generating module (35), configured to generate the depth map of the scene based on the second depth value of each pixel.

9.  The apparatus of claim 8, wherein the second generating module (34) comprises:

    a first generating unit, configured to generate adjacent coordinate locations of the three-dimensional coordinate location by inputting the three-dimensional coordinate location into a grouping layer of the depth correction model;
    a feature extracting unit, configured to generate a first intermediate feature of the three-dimensional coordinate location by inputting the three-dimensional coordinate location and the pixel information of the pixel into a feature extraction layer of the depth correction model;
a feature fusing unit, configured to generate a second intermediate feature of the three-dimensional coordinate location by inputting the first intermediate feature of the three-dimensional coordinate location and first intermediate features of the adjacent coordinate locations of the three-dimensional coordinate location into a feature fusion layer of the depth correction model; and
a second generating unit, configured to generate the second depth value of the three-dimensional coordinate location based on the second intermediate feature of the three-dimensional coordinate location.

10. The apparatus of claim 9, wherein the first generating unit is further configured to:

determine a first preset space range based on the three-dimensional coordinate location by using the grouping layer of the depth correction model; and
determine the three-dimensional coordinate locations within the first preset space range by the grouping layer of the depth correction model as the adjacent coordinate locations of the three-dimensional coordinate location.

11. The apparatus of claim 9, wherein the first generating unit is further configured to:

determine a first preset space range based on the three-dimensional coordinate location by using the grouping layer of the depth correction model; and
determine, by the grouping layer of the depth correction model, coordinate locations obtained based on three-dimensional coordinate locations within the first preset space range and preset offsets as the adjacent coordinate locations of the three-dimensional coordinate location, wherein there is a correspondence between the three-dimensional coordinate locations within the first preset space range and the preset offsets.

12. The apparatus of claim 9, wherein the first generating unit is further configured to:

determine a first preset space range based on the three-dimensional coordinate location by using the grouping layer of the depth correction model; and
determine, by the grouping layer of the depth correction model, three-dimensional coordinate locations within the first preset space range and coordinate locations obtained based on the three-dimensional coordinate locations within the first preset space range and preset offsets as the adjacent coordinate locations of the three-dimensional coordinate location, wherein there is a correspondence between the three-dimensional coordinate locations within the first preset space range and the preset offsets.

13. The apparatus of claim 8, wherein the first generating module (32) is further configured to:
generate the first depth value of each pixel in the visual image by inputting the point cloud map and the visual image into a codec network.

14. A non-transitory computer-readable storage medium storing computer instructions, wherein the computer instructions are used to make a computer execute the method according to any one of claims 1-7.

15. A computer program product comprising a computer program, wherein when the computer program is executed by a processor, the method according to any one of claims 1-7 is implemented.

obtaining a point cloud map and a visual image of a scene | 101

generating a first depth value of each pixel in the visual image based on the point cloud map and the visual image | 102

determining a three-dimensional coordinate location of each pixel in a world coordinate system based on a coordinate location and the first depth value of each pixel in the visual image | 103

generating a second depth value of each pixel by inputting the three-dimensional coordinate location and pixel information of each pixel into a depth correction model | 104

generating the depth map of the scene based on the second depth value of each pixel | 105

FIG. 1

obtaining a point cloud map and a visual image of a scene — 201

generating a first depth value of each pixel in the visual image by inputting the point cloud map and the visual image into a codec network — 202

determining a three-dimensional coordinate location of each pixel in a world coordinate system based on a coordinate location and the first depth value of each pixel in the visual image — 203

generating adjacent coordinate locations of each three-dimensional coordinate location by inputting each three-dimensional coordinate location into a grouping layer of the depth correction model — 204

generating a first intermediate feature of each three-dimensional coordinate location by inputting the three-dimensional coordinate location and the pixel information of each pixel into a feature extraction layer of the depth correction model — 205

generating a second intermediate feature of each three-dimensional coordinate location by inputting the first intermediate feature of each three-dimensional coordinate location and first intermediate features of the adjacent coordinate locations of each three-dimensional coordinate location into a feature fusion layer of the depth correction model — 206

generating a second depth value of each three-dimensional coordinate location based on the second intermediate feature of each three-dimensional coordinate location — 207

generating the depth map of the scene based on the second depth value of each pixel — 208

FIG. 2

14

Apparatus for generating a depth map

obtaining module — 31

first generating module — 32

determining module — 33

second generating module — 34

third generating module — 35

FIG. 3

800

Computing unit — 801

ROM — 802

RAM — 803

— 804

— 805

I/O interface

Input unit — 806

Output unit — 807

Storage unit — 808

Communication unit — 809

FIG. 4